Europäisches Patentamt

European Patent Office

Office européen des brevets

(19)

(11) Publication number: 0 334 422
A2

(12) **EUROPEAN PATENT APPLICATION**

(21) Application number: 89200641.2

(22) Date of filing: 14.03.89

(51) Int. Cl.⁴: **C08F 222/40 , C08F 2/18 , C08F 4/28**

(30) Priority: 16.03.88 NL 8800642

(43) Date of publication of application:
27.09.89 Bulletin 89/39

(84) Designated Contracting States:
AT BE CH DE ES FR GB IT LI NL SE

(71) Applicant: STAMICARBON B.V.
Mijnweg 1
NL-6167 AC Geleen(NL)

(72) Inventor: Bleichrodt, Frederik
Leerlooierstraat 6
NL-6151 DC Sittard(NL)
Inventor: Essers, Franciscus Elisabeth
Jacobus
Bilserbaan 31
NL-6217 JD Maastricht(NL)

(54) **Spherical particles.**

(57) The invention relates to a process of forming spherical particles with a particle size between 25 and 300 micrometres, characterized in that a mixture comprising: a bismaleimide compound of an aromatic diamine and an ethylenically unsaturated compound that lowers the melting point is polymerised in a suspension medium with a peroxide initiator, the suspension polymerization being effected at a temperature above the softening point of the mixture to be polymerised. The invention further relates—to the obtained product, and a paste like potting compound from the obtained product.

EP 0 334 422 A2

## SPHERICAL PARTICLES

The invention relates to spherical particles with a particle size between 25 and 300 micrometres.

Spherical particles of this size are known. The particles are often manufactured from glass or from phenol-formaldehyde resins. These particles are, however, for certain applications either too heavy or not strong enough if they are hollow. The invention provides particles that are relatively light and strong.

The spherical particles with a particle size between 25 and 300 micrometres according to the invention are characterized in that they are obtainable by suspension polymerization of a mixture comprising a bismaleimide compound of an aromatic diamine and an ethylenically unsaturated compound that lowers the melting point in a suspending medium with a peroxide initiator, the suspension polymerization being effected at a temperature above the softening point of the mixture to be polymerized.

US-A-4,224,427 describes spherical particles obtained by emulsion polymerization of a bismaleimide compound and an ethylenically unsaturated monomer, but this relates to hydrogels for medicines with particle sizes up to 5 mm. BE-A-786,119 and BE-A-786,120 also mention an emulsion polymerization in connection with bismaleimide compounds, but these describe a prepolymerization only. In the present invention the polymerization is continued to 90-100% conversion.

As bismaleimide compound of an aromatic diamine use may, for example, be made of the compounds described in EP-A-135,964, US-A-4,298,720 and US-A-4,224,427. Preferably a bismaleimide that is described in EP-A-135,964 is chosen.

As ethylenically unsaturated compound that lowers the melting point a bismaleimide oligomer may, for instance, be chosen or, for example, an ethylenically unsaturated monomer with fewer than 30 carbon atoms. These compounds serve to lower the melting point or the viscosity of the mixture with the bismaleimide compound to such an extent that spherical particles with a sufficiently small diameter can be formed relatively quickly in the disperse phase before polymerization.

As ethylenically unsaturated monomer a monomaleimide compound of an aromatic or aliphatic mono- or diamine may be chosen. These are described in, for example EP-A-135,964, DE-A-3,012,179, FR-A-2,031,538 and US-A-4,593,038.

In addition, vinyl aromatic compounds, alkyl (meth)acrylate, hydroxyalkyl (meth)acrylate, divinyl and di- and triallyl compounds may be used as ethylenically unsaturated monomer. Examples of these are styrene, α-methylstyrene, p-methylstyrene, chloro-styrene, hydroxy- or aminoalkylstyrene, hexyl (meth)acrylate, ethyl (meth)acrylate, hydroxyethyl (meth)acrylate, divinylbenzene, diallyl cyanurate, triallyl isocyanurate, triallyl cyanurate, divinyl ester of maleic acid, trimethylolpropene triacrylate, etc. Other suitable monomers are maleic acid anhydride and unsaturated epoxy compounds as described in, for example, DD-A-235,881.

Preferably mixtures of ethylenically unsaturated monomers are used, more in particular a mixture of a monomaleimide compound and one or more other unsaturated monomers.

Furthermore, impact-modifiers such as rubbers with amino end-groups may be added to the above-described mixture. Examples of suitable rubbers are described in, for example, EP-A-206,383 and WO-A-8,402,528.

To obtain spherical particles the resin mixture is dispersed in a liquid at a temperature above the softening temperature. The viscosity of the resin mixture will then usually be lower than 1000 Pa.s, because otherwise very much energy is required to obtain small particles. The viscosity of the resin mixture is preferably lower than 100 Pa.s, in particular between 10 and 1500 mPa.s. Viscosity is measured oscillating with a Haake viscosimeter.

As dispersing medium water, ethylene glycol, propylene glycol or a mixture hereof may, for example, be chosen. Other liquids in which the resin mixture does not dissolve may also be used.

It is advantageous to promote dispersion by adding dispersing agents. In particular, this ensures that the resin phase does not coagulate as it sets. Polyvinyl alcohol may, for example, be used as dispersing agent.

When the resin has been dispersed and the particle size distribution of the spherical particles has reached the desired proportion, the polymerization can be started by adding initiatior to the dispersion. Preferably use is made of one or more initiators that dissolve poorly in the dispersing medium, but diffuse well in the resin particles. This prevents inward polymerization into the particles, which results in crack formation. The polymerization can be accelerated by adding, for example, a transition metal salt or by increasing the temperature. The efficient heat dissipation makes it possible to reduce the gelation time to a few minutes without adversely affecting the properties. After 80-99 % conversion it is advantageous to further raise the temperature and/or to postcure at temperatures between 100 and 250□C the spherical particles obtained.

The particles obtained can be sieved before or after the postcuring.

The spherical particles obtained are particularly suitable as filler. This filler has very good properties such as good flame-resistance, high compression resistance and great tensile strength at a relatively small weight.

The spherical particles obtained are very usefull as a filler in a paste like potting compound. Potting compounds can, for example, be used for filling a honeycomb structure locally where a much higher compression strength is required. It is advantageous when the potting compound comprises a mixture of hardened spherical particles and a bismaleimide compound containing resin, as matrix, which mixture has a viscosity of 500-2000 mPa.s, preferably 1200-1700 mPa.s. The viscosity of the resin can be influenced as described for example in EP-A-135 964. The volume ratio particles : resin matrix should be 60 : 40 - 80 : 20, because then the shrinkage is the lowest, due to the close packing of the particles.

The invention will be further elucidated with the aid of the following examples, without being limited thereto.

Examples

Example I

1.6 l of water was heated to 40°C in a 3.0 l reactor with jacket heating and 0.8 g of polyvinyl alcohol was dissolved in this. The dispersing medium was stirred with a propeller mixer at 900 rpm. 200 g of resin mixture was added, followed by stirring. The resin mixture consisted of 58 wt.% solids containing bismaleimide as obtained according to example I of EP-A-206,383, 24 wt.% styrene, 12 wt.% hydroxyethyl (meth)acrylate (HEMA) and 6 wt.% acrylonitrile-butadiene rubber with amino end groups. After half an hour tert.-butyl peroxybenzoate was added, followed by stirring for about 5 minutes. Then 2 g of 50 % methyl ethyl ketone peroxide solution was added and the polymerization started. After 45 minutes the resin had gellified. After 1 hour's stirring, after more than 50% conversion, the temperature was raised to 80°C and the stirring was continued for another 2.5 hours. After sieving and washing with water the product was dried at 100°C for 2 hours and postcured at 180°C for 24 hours. The yield was 70% particles of between 96 and 212 micrometres.

Examples II and III

In a manner similar to that of example I particles were produced from solids containing 58 wt.% BMI as described in example I, 29 wt.% styrene and 13 wt.% HEMA, and solids containing 66 wt.% BMI, and 34 wt.% styrene. Comparable results were obtained.

Example IV

50 ml of water was heated to 90°C in a 1 l reactor with jacket heating and four baffle plates. 0.4 g of polyvinyl alcohol was dissolved in this. To this was added 50 g of compimide 896$^R$ (a composition containing bismaleimide supplied by Technochemie) while the mixture was stirred with a propeller mixer (2000 rpm). The viscosity of compimide 896$^R$ at 90°C is about 1100 mPa.s. The reaction was initiated with 1 g of benzoyl peroxide after 1 hour. After 4 hours the mixture was cooled and the product was sieved and washed with water. The particles obtained were dried for 2 hours at 100°C and postcured at 180°C for 24 hours. The yield was 25 g of particles of between 96 and 212 micrometres.

Example V

In a manner similar to that described in example IV, a bismaleimide resin, as obtained according to example I of EP-A-206383, was polymerized. The resin had a viscosity of 75 Pa.s at 90°C. On account of its high viscosity, the mixture was stirred for 4 hours before the initiator was added. The result was similar to that obtained in example IV.

Example VI

In a 3 l reactor with jacket heating 2 l of water was heated to 40°C. 4 g of polyvinyl alcohol was dissolved, while the mixture was stirred with a propeller mixer at 1500 rpm.

To this mixture was added 200 g of resin consisting of 54 wt.% bismaleimide resin, as obtained according to example I of EP-A-206,383, 27 wt.% styrene and 19 wt.% methacryloxyethyl phosphate. After half an hour's stirring, tert.-butyl peroxybenzoate was added and the mixture was stirred for 5 minutes. Then 2 g of 50% methyl ethyl ketone peroxide solution was added and the polymerization started. The resin had gellified after 45 minutes. After 1 hour's stirring, and more than 50% conversion, the temperature was raised to 80°C and the stirring was continued for another 2.5 hours.

After sieving and washing with water, the product was dried for 2 hours at 100□C, and postcured for 8 hours at 200□C. The yield was 75% particles of between 105 and 300 micrometres.

## Claims

1. A process of forming spherical particles with a particle size between 25 and 300 micrometres, characterized in that a mixture comprising a bismaleimide compound of an aromatic diamine and an ethylenically unsaturated compound that lowers the melting point are polymerised in a suspending medium with a peroxide initiator, the suspension polymerization being effected at a temperature above the softening point of the mixture to be polymerized.

2. Process according to claim 1, characterized in that the mixture to be polymerised has a viscosity of less than 100 Pa.s before the polymerization.

3. Process according to claim 2, characterized in that the mixture has a viscosity of 10-1500 mPa.s.

4. Process according to any one of claims 1-3, characterized in that t-butyl peroxide, t-butyl peroxybenzoate and methyl ethyl ketone peroxide are applied as initiator.

5. Process according to any one of claims 1-4, characterized in that water, ethylene glycol, propylene glycol or a mixture hereof is applied as suspending medium.

6. Process according to any one of claims 1-5, characterized in that a dispersing agent is used in the suspension polymerization.

7. Process according to any one of claims 1-6, characterized in that the ethylenically unsaturated compound that lowers the melting point is an ethylenically unsaturated monomer with fewer than 30 carbon atoms.

8. Process according to claim 7, characterized in that the ethylenically unsaturated monomer is chosen from the group consisting of monomaleimide of an aromatic amine, alkyl or hydroxyalkyl esters of (meth)acrylic acid, (di)vinylaromatic compounds, polyallyl compounds and mixtures hereof.

9. Spherical particles with a particle size between 25 and 300 micrometres, characterized in that they are obtainable by a process as described in any one of claims 1-8.

10. Spherical particles with a particle size between 25 and 300 micrometer, characterized in that they consist essentially of the curing product of a bismaleimide compound of an aromatic diamine, an ethylenically unsaturated compound, and further usual additives.

11. Particles according to any one of claims 9-10 characterized in that the particle size is between 100 and 250 micrometres.

12. Potting compound comprising a mixture of hardened spherical particles as described in any one of the claims 9-11 or obtained with a process as described in any one of the claims 1-8, and a bismaleimide compound containing resin in a volume ratio of 60 : 40 to 80 : 20, which mixture has a viscosity of 500-2000 mPa.s, at 20□C.